# EUROPÄISCHE PATENTSCHRIFT

(11) **EP 2 464 457 B1**
(45) Veröffentlichungstag und Bekanntmachung des Hinweises auf die Patenterteilung: **28.10.2020**
(21) Anmeldenummer: 10770960.2
(22) Anmeldetag: 09.08.2010
(51) Int. Cl.: B02C 4/02, B02C 4/12, B02C 4/32, B02C 23/12, B02C 4/28

(54) **VERFAHREN ZUR FEINMAHLUNG VON MINERALISCHEN MATERIALIEN**
METHOD FOR FINE GRINDING OF MINERAL MATERIALS
PROCÉDÉ DE BROYAGE FIN DE SUBSTANCES MINÉRALES

(30) Priorität: 14.08.2009 DE 102009037660
(43) Veröffentlichungstag der Anmeldung: 20.06.2012
(73) Patentinhaber: Argo Industrial Process Solutions GmbH, 30826 Garbsen (DE)
(72) Erfinder: Feige, Fritz, 06862 Dessau-Rosslau/Europadorf (DE)
(74) Vertreter: Seewald, Jürgen
(86) Internationale Anmeldenummer: PCT/DE2010/000947
(87) Internationale Veröffentlichungsnummer: WO 2011/018077

(56) Entgegenhaltungen:
- EP-B1- 1 073 523
- WO-A1-00/56458
- DE-A1-102006 004 282
- DE-A1-102007 045 373
- DE-U- 1 965 041
- US-A- 2 025 623

## Beschreibung

Die Erfindung betrifft ein Verfahren zur Feinmahlung von mineralischen Materialien mit den im Oberbegriff des Patentanspruchs 1 genannten Merkmalen.

Die Feinmahlung von vorzugsweise harten und spröden Materialien wie Kalkstein, Zementklinker und Hüttensand auf Fertiggutqualität im Kreislauf mit einem Sichter erfolgt traditionell in Kugelmühlen und in neuerer Zeit immer häufiger in Vertikal-Rollenmühlen, vereinzelt auch in Hochdruck-Rollenmühlen.

Aus der DE 27 08 053 B2 ist eine als Gutbett-Walzenmühle bezeichnete Hochdruck-Rollenmühle bekannt, bei der die Zerkleinerung des Materials durch einmalige Druckbeanspruchung im Spalt von zwei gegenläufig angetriebenen Rollen mit horizontaler Lagerung unter Anwendung von spezifischen Zerkleinerungskräften von über bzw. weit über 5000 kN/m² erfolgt.

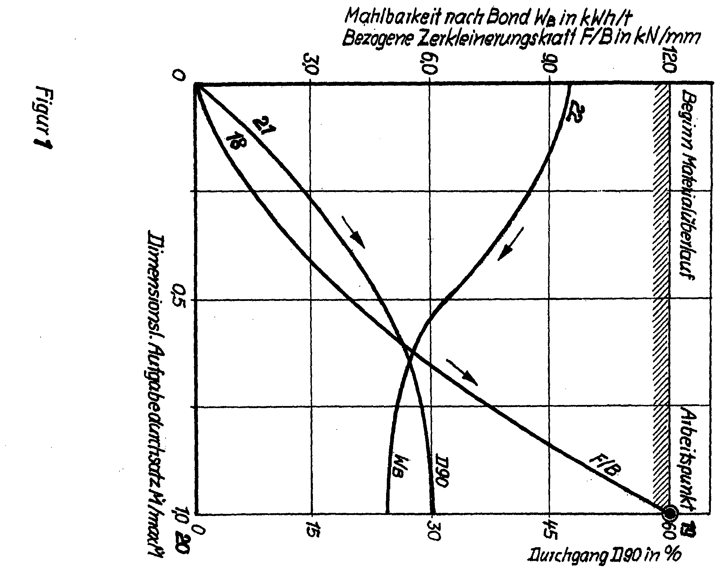

Nachteilig ist, dass die Hochdruck-Rollenmühle, die nach dem Vorbild einer Kompaktierpresse über einen Füllstand gesteuerten Materialaufgabebunker beaufschlagt wird, bedingt durch einen gewissen Stopfeffekt beim Materialeinzug, immer einem Arbeitspunkt zustrebt, der nicht nur durch sehr hohe Anpresskräfte und Drehmomente gekennzeichnet ist, sondern auch zugleich solche wichtigen Parameter wie die Spaltweite und den Durchsatz punktuell festlegt. Zur Erzielung eines bestimmten Zerkleinerungsergebnisses ist es unter diesen Bedingungen fast unmöglich, weder die optimale Zerkleinerungskraft noch die materialabhängig günstigste Aufgabeschichtdicke unabhängig voneinander einzustellen. Da jedoch die Anwendung von spezifischen Zerkleinerungskräften oberhalb von 5000 kN/m² nicht mehr zur Verbesserung des Zerkleinerungsergebnisses einer komprimierten Materialschicht beiträgt und die gemeinsame Beanspruchung des aus grobkörnigem Frischgut und Umlaufgut bestehenden Mahlguts neueren Untersuchungen zufolge mit negativen Auswirkungen auf die Feinguterzeugung infolge hoher Punktbelastungen Beschädigungen auf den Beanspruchungsoberflächen verursacht, sind die Hersteller von Hochdruck-Rollenmühlen im Laufe der letzten Jahre dazu übergegangen, die bewegliche Mahlrolle weicher einzustellen, womit allerdings das ursprüngliche Ziel, diese Mühle auch für die Fertigmahlung einsetzen zu können, aufgegeben wurde. Da zudem eine Hochdruck-Rollenmühle, deren Rollen separat angetrieben werden, zur Vermeidung von Leistungsverzweigungen immer mit einem Nullspalt betrieben werden muss, sind Mahlfeinheiten, wie sie heute etwa bei der Hüttensandmahlung mit R45-Rückstandswerten zwischen 0 und 5 % gefordert werden, selbst bei Inkaufnahme von großen Umlaufzahlen praktisch nicht erreichbar. Ein wesentlicher Nachteil der Hochdruck-Rollenmühle besteht auch darin, dass in Abhängigkeit von den Materialeigenschaften sowie der Geometrie der Beanspruchungsoberflächen das Durchsatz-Geschwindigkeitsverhalten sich nur bis zu Rollenumfangsgeschwindigkeiten von etwa 1 m/s linear verhält und bei höheren Geschwindigkeiten der Durchsatz mit einem progressiven Anstieg des spezifischen Energiebedarfs stark zurückgeht. Figur 1 versucht dieses typische Betriebsverhalten einer Hochdruck-Rollenmühle in Diagrammdarstellung zu veranschaulichen. Dem Diagramm liegt die Zerkleinerung eines vorzerkleinerten, mittelharten Kalksteins zugrunde. Wenn etwa eine Hochdruck-Rollenmühle bei konstanter Umfangsgeschwindigkeit der Rollen von Null an beginnend beaufschlagt wird, dann steigen unter steter Aufweitung des Rollenspalts bei einem auffällig unruhigen Laufverhalten die Zerkleinerungskraft 18 und damit zugleich die Leistungsaufnahme exponentiell solange an, bis sich aufgrund eines Gleichgewichtzustands ein Arbeitspunkt 19 eingestellt hat, über dessen Koordinaten auch der Aufgabedurchsatz 20 festgelegt wird. Da zur Erzielung eines hohen Zerkleinerungsergebnisses dünne Materialschichten erforderlich sind, müssen wie das Diagramm zeigt, spezifische Zerkleinerungskräfte oberhalb von 5000 kN/m² mit allen den oben beschriebenen Nachteilen in Kauf genommen werden. Aus dem Diagramm ist ersichtlich, dass bei Anwendung derartig hoher Zerkleinerungskräfte das Zerkleinerungsergebnis, beispielhaft dargestellt durch die Entwicklung des D90-Durchgangs 21, nicht mehr verbessert wird, was auch durch den charakteristischen Kurvenverlauf des Mahlbarkeitwerts nach Bond 22 unterstrichen wird. Die Auseinandersetzung der Mühlenhersteller mit den systembedingt hohen Zerkleinerungskräften und insbesondere mit dem damit verbundenen hohen Verschleiß der Beanspruchungsoberflächen hat deshalb dazu geführt, dass die Hochdruck-Rollenmühle heute fast ausschließlich nur noch für die Vormahlung in Verbindung mit einer Kugelmühle zum Einsatz gelangt.

Mit der EP 1073 523 B1 wurde eine als Band-Rollenmühle bezeichnete Mühle vorgeschlagen, welche die für die Hochdruck-Rollenmühle charakteristische Verknüpfung von Durchsatz und Zerkleinerungskraft aufhebt, indem das zu zerkleinernde Material als Schicht einem umlaufenden Plattenband aufgegeben wird, das es einer hydro-pneumatisch auf die Materialschicht angestellten Mahlrolle zuführt, um in dem sich bildenden Spalt zwischen Mahlrolle und Plattenband eingezogen und unter Anwendung von spezifischen Zerkleinerungskräften von 600 bis 3000 kN/m² beansprucht zu werden. Abgesehen davon, dass bei der Zerkleinerung von solchen harten und spröden Materialien wie Zementklinker und Hüttensand weder die o.g. spezifischen Zerkleinerungskräfte, noch die nur um einen Dezimeter lange Beanspruchungszone bei einmaliger Beanspruchung ausreichend sind, um ein akzeptables Zerkleinerungsergebnis zu erhalten, erfordert die Umsetzung dieses Verfahrensprinzips einen hohen technischen Aufwand. Dieser hohe Aufwand entsteht dadurch, dass das Plattenband in Verbindung mit einer Laschenkette als Zugorgan einerseits für die hohen Druckbeanspruchungen in der Beanspruchungszone und andererseits mit Rücksicht auf die notwendige Verschleiß- und Lärmpegelbegrenzung mit niedrigen Geschwindigkeiten ausgelegt werden muss. Diese Auslegungsbeschränkungen führen jedoch zwangläufig zu einer schwereren Maschinenkonstruktion, zu höheren maschinentechnisch bedingten Verlusten sowie zu einer signifikanten Baugrößen- bzw. Durchsatzbegrenzung. Aufgrund dieser technischen Nachteile ist die Band-Rollenmühle nicht in der Lage, weder ein Endprodukt mit Fertigqualität wirtschaftlich zu produzieren noch die Vertikal-Rollenmühle oder Hochdruck-Rollenmühle zu ersetzen.

Mit dem Ziel, diese Baugrößen- bzw. Durchsatzbegrenzung zu beseitigen, den maschinentechnischen Aufwand zu reduzieren und die Energieausnutzung zu verbessern, wurde gemäß der DE 10 2007 045 373 A1 eine Zerkleinerungsvorrichtung vorgeschlagen, die auch als Beta-Rollenmühle bezeichnet, auf das umlaufende Plattenband verzichtet und mittels einer entsprechenden Aufgabeeinrichtung die Materialschicht auf die Beanspruchungsoberfläche einer angetriebenen Rolle aufbringt, auf deren Umfang, in Drehrichtung verlagert, eine hydro-pneumatisch angestellte Mahlrolle positioniert ist. Bei diesem Verfahrensprinzip kann zwar der Durchsatz über einen breiten Geschwindigkeitsbereich geregelt werden, aber die einstufige Beanspruchung des Mahlguts, selbst unter Anwendung von spezifischen Zerkleinerungskräften bis zu 5000 kN/m², ist nicht ausreichend, um bei noch vertretbaren Mahlgutumläufen ein Fertigprodukt mit den heutzutage geforderten Mahlfeinheiten wirtschaftlich zu realisieren. Außerdem folgt, wie oben bereits erwähnt, aus neueren Untersuchungen, dass das kontinuierlich in den Mahlkreislauf eingespeiste Frischgut, welches in der Regel nicht nur grobkörnig, sondern auch mit Überkorngrößen behaftet ist, bei seiner Beanspruchung unter den Bedingungen einer nur einstufigen Beanspruchung die Feinguterzeugung infolge der Zertrümmerung von insbesondere Ober- und Überkorngrößen einerseits empfindlich stört und andererseits zu hohen punktuellen Überbelastungen der Beanspruchungsoberflächen führt, die das Drei- bis Fünffache der mittleren Materialbeanspruchung betragen können.

Die WO 00/56458 A1 offenbart ein Verfahren zur Feinmahlung von mineralischen Materialien, wie z.B. Kalkstein, Zementklinker und Hüttensand auf Fertiggutqualität, wobei die Zerkleinerung von seitlich begrenzten Materialschichten unter Anwendung von hohen bis sehr hohen Druckkräften in den sich ausbildenden Rollenspalten zwischen sich gegenläufig drehenden und horizontal gelagerten Rollen erfolgt. Dabei wird das zu zerkleinernde Material regelbar als stranggeformte Schicht mit vorgegebener Dicke auf die Beanspruchungsoberfläche im Scheitelbereich einer angetriebenen Rolle mit Umfangsgeschwindigkeit aufgegeben, transportiert und zum Zwecke seiner Beanspruchung in den Rollenspalt . Dabei wird das Material unter den Bedingungen frei wählbarer und unabhängig voneinander einstellbarer Zerkleinerungskräfte komprimiert und als Folge der Kompressionsbeanspruchung zerkleinert, wobei die Mahlrollen durch die hydraulisch erzeugten Zerkleinerungskräfte auf die mit dem Material belegte Beanspruchungsoberfläche der angetriebenen und mit größeren Durchmesser ausgeführten Rolle gepresst und durch diese geschleppt werden.

Aufgabe der Erfindung ist es, ein Verfahren zur Feinmahlung von mineralischen, vorzugsweise harten und spröden Materialien wie z.B. Kalkstein, Zementklinker und Hüttensand auf Fertiggutqualität im Kreislauf mit einem Sichter zu schaffen, das sich durch eine hohe Energieausnutzung, durch ein lineares Durchsatz-Geschwindigkeitsverhalten in einem breiten Geschwindigkeitsbereich auszeichnet und zu einer einfachen Maschine führt, die sich zur flexiblen Umstellung von einem Mahlgut auf das andere eignet, große Massedurchsätze realisiert und bei günstigen Investitionskosten über einen niedrigen Wartungs- und Instandsetzungsaufwand verfügt.

Diese Aufgabe wird durch ein Verfahren gelöst, welches die Merkmale des Anspruchs 1 aufweist. Vorteilhafte Ausgestaltungen der Erfindung sind in den abhängigen Ansprüchen angegeben.

Bei dem erfindungsgemäßen Verfahren zur Feinmahlung von mineralischen Materialien ist eine erste Rolle als angetriebene Mahlrolle ausgeführt, während eine zweite, einen größeren Durchmesser aufweisende Rolle durch die erste Rolle geschleppt wird, wobei die erste Rolle, in Längsaufnahmen fest und unverschiebbar gelagert ist, während die zweite Rolle mit einer Beanspruchungsoberfläche auf die erste Rolle hydro-pneumatisch angestellt ist.

Alternativ kann die zweite Rolle fest und unverschiebbar in Längsaufnahmen gelagert sein, während die erste Rolle hydro-pneumatisch auf die Beanspruchsoberfläche der zweiten Rolle angestellt ist.

Bei beiden Alternativen wird das zu zerkleinernde Material vor seiner Zerkleinerung im Rollenspalt zwischen den beiden Rollen, die in den um 10 bis 30 Grad zur Horizontalen geneigten Längsaufnahmen gelagert sind, in einer Aufgabeeinrichtung mittels einer Drehzahl geregelten Feinbrechwalze mit elastisch verstellbarer Beanspruchungswand einer scherenden und reibenden Beanspruchung unterzogen, um anschließend regelbar als stranggeformte Schicht mit vorgegebener Dicke auf die Beanspruchungsoberfläche im Scheitelbereich der zweiten Rolle aufgegeben und in den Rollenspalt der beiden Rollen zur Zerkleinerung transportiert zu werden.

Die Vorteile des erfindungsgemäßen Verfahrens bestehen im Wesentlichen darin, dass
- durch die Anordnung von zwei horizontal und unter einer Neigung zur Horizontalen von 10 bis 30 Grad gelagerten Rollen sowie das angewandte Antriebssystem die Materialbeanspruchung unter Anwendung von mittleren bezogenen Druckkräften gewährleistet ist, wodurch signifikante Energieeinsparungen erzielt werden,
- durch das angewandte Antriebssystem in Verbindung mit einer determinierten Materialbeaufschlagung solche wichtigen Parameter wie die Schichtdicke, die bezogene Mahlkraft und der Durchsatz unabhängig voneinander sowohl während als auch außerhalb des Betriebs eingestellt und verändert werden können,
- durch das angewandte Antriebssystem und die determinierte Materialaufgabe auf die Beanspruchungsoberfläche der mit großem Durchmesser ausgeführten Rolle im Schleppantrieb durch die mit kleinerem Durchmesser ausgeführte und angetriebene Mahlrolle der Materialeintritt in den Rollenspalt durch einen Scaping-Effekt erfolgt, wodurch gute Zerkleinerungsergebnisse bei vibrationsfreiem Betrieb erzielt werden,
- durch das angewandte Antriebssystem in Verbindung mit einer determinierten Materialbeaufschlagung mittels einer Feinwalze mit einstellbarer Beanspruchungswand der Durchsatz geschwindigkeitsproportional bei konstant bleibendem spezifischen Energiebedarf bis zu Rollen-Umfangsgeschwindigkeiten von 5,0 m/s bei vibrationsfreiem Betrieb gesteigert werden kann,
- durch eine scherende und reibende Vorbeanspruchung des aus Frisch- und Umlaufgut bestehenden Mahlguts in einer aus Feinbrechwalze mit einstellbarer Beanspruchungswand bestehenden Aufgabevorrichtung Überkorngrößen und Agglomerate zerkleinert werden, was sowohl die Effizienz der Feinguterzeugung im Rollenspalt erhöht als auch die Beanspruchungsoberflächen der Rollen vor punktuellen Überbeanspruchungen schont,
- durch die Anordnung der Rollen und das angewandte Antriebssystem in Verbindung mit der Verwendung einer als Feinbrechwalze ausgeführten Aufgabevorrichtung das Zerkleinerungssystem sich durch Flexibilität im Betrieb und kompakte Bauweise auszeichnet.

Die Erfindung wird anhand von mehreren Ausführungsbeispielen näher erläutert. Einige Ausführungsbeispiele werden als nicht zur Erfindung gehörend bezeichnet, weil in diesen Beispielen die im Durchmesser größere Rolle angetrieben wird. Die Zeichnungen zeigen:
- Fig. 1:: das charakteristische Betriebsverhalten einer Hochdruck-Rollenmühle in Diagrammdarstellung
- Fig. 2:: eine nicht erfindungsgemäße Vorrichtung in schematischer Darstellung mit einer um 45 Grad und einer um 90 Grad vom Scheitel der Antriebsrolle in Drehrichtung versetzt angeordneten Mahlrolle;
- Fig. 3:: eine nicht erfindungsgemäße Vorrichtung in schematischer Darstellung mit einer im Scheitel und einer um 90 Grad vom Scheitel der Antriebsrolle in Drehrichtung versetzt angeordneten Mahlrolle;
- Fig. 4:: eine nicht erfindungsgemäße Vorrichtung in schematischer Darstellung mit einer im Scheitel und einer um 45 Grad vom Scheitel der Antriebsrolle in Drehrichtung versetzt angeordneten Mahlrolle;
- Fig. 5:: eine nicht erfindungsgemäße Vorrichtung in schematischer Darstellung mit einer im Scheitelbereich der Antriebsrolle befindlichen Einrichtung zur dosierten Aufgabe und Erstbeanspruchung des Materials und einer um 45 Grad vom Scheitel der Antriebsrolle in Drehrichtung versetzt angeordneten Mahlrolle;
- Fig. 5a:: eine erfindungsgemäße Vorrichtung in schematischer Darstellung gemäß Figur 5 mit dem Unterschied, dass nicht die mit größerem Durchmesser ausgeführte Rolle, sondern die fest und unverschiebbar gelagerte Mahlrolle angetrieben wird;
- Fig. 5b:: eine erfindungsgemäße Vorrichtung in schematischer Darstellung gemäß Figur 5 mit dem Unterschied, dass nicht die mit größerem Durchmesser ausgeführte Rolle, sondern die verschiebbar gelagerte Mahlrolle angetrieben wird;
- Fig. 6:: eine nicht erfindungsgemäße Vorrichtung in schematischer Darstellung als Duplex-Mühle, realisiert durch die spiegelbildliche Anordnung von zwei Vorrichtungen gemäß Figur 2;
- Fig. 7:: eine nicht erfindungsgemäße Vorrichtung in schematischer Darstellung als Duplex-Mühle, realisiert durch die spiegelbildliche Anordnung von zwei Vorrichtungen gemäß Figur 5;
- Fig. 8:: eine nicht erfindungsgemäße Vorrichtung in Kreislaufschaltung mit einem Hochleistungssichter;
- Fig. 9:: eine nicht erfindungsgemäße Vorrichtung in Kreislaufschaltung mit einem Hochleistungssichter und integriertem Steigrohrtrockner, speziell für die Verarbeitung von feuchtem Hüttensand;
- Fig. 10:: eine nicht erfindungsgemäße Vorrichtung gemäß Figur 5 in Kreislaufschaltung mit zwei Hochleistungssichtern zur Feinmahlung von zwei gleichen oder verschiedenen Materialien oder Materialgemischen auf unterschiedliche Fertiggutqualität;
- Fig. 11:: eine Seitenansicht der erfindungsgemäßen Zerkleinerungsvorrichtung gemäß Figur 5a mit dosierter Materialaufgabe und Erstbeanspruchung des Mahlguts durch eine Feinbrechwalze mit einstellbarer Beanspruchungswand;
- Fig. 12:: eine nicht erfindungsgemäße Einrichtung zur dosierten Materialaufgabe und Erstbeanspruchung des aus Frischgut und Umlaufgut bestehenden Mahlguts durch eine Feinbrechwalze mit einstellbarer Beanspruchungswand;
- Fig. 13:: einen nicht erfindungsgemäßen Vorschlag zur Ausschleusung von metallischen Fremdkörpern aus dem Mahlkreislauf durch Anordnung der rotierenden Dosier- und Austragseinrichtung bzw. Feinbrechwalze außerhalb des Scheitels der Antriebsrolle.

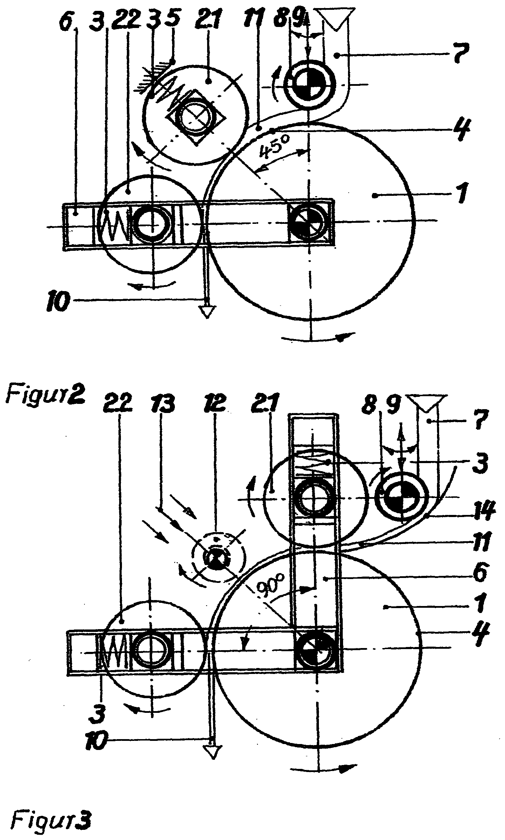

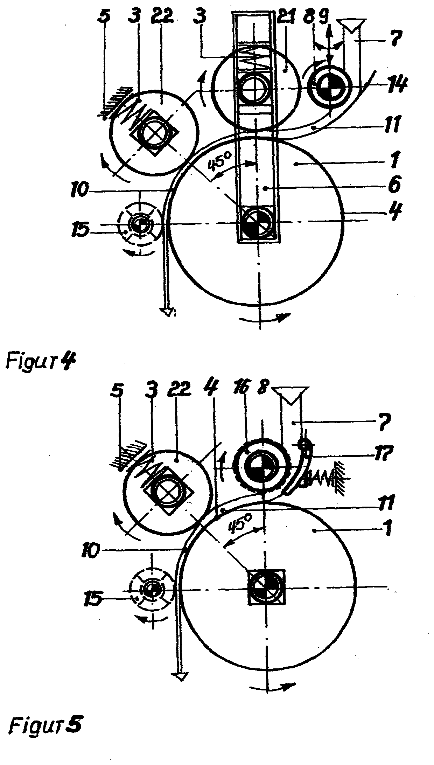

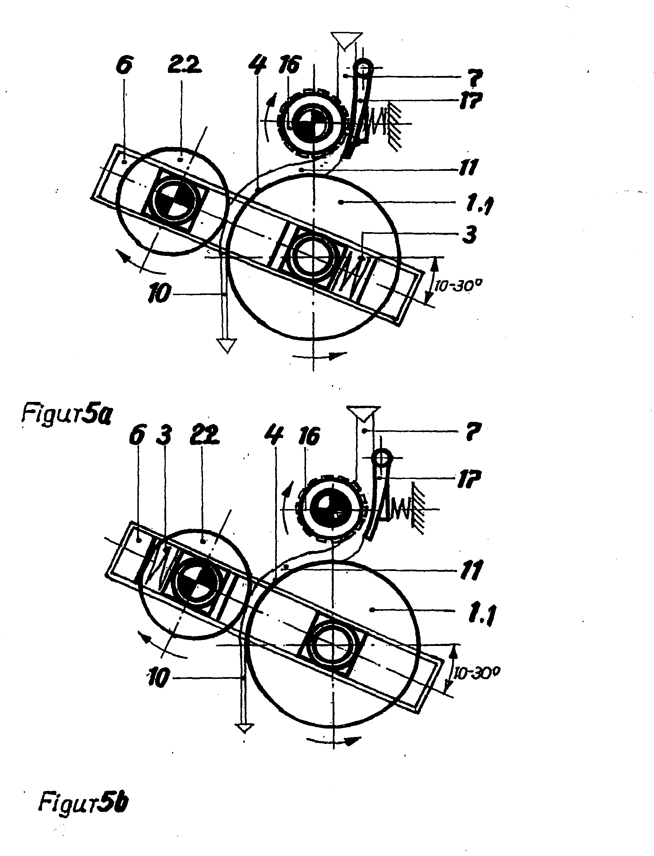

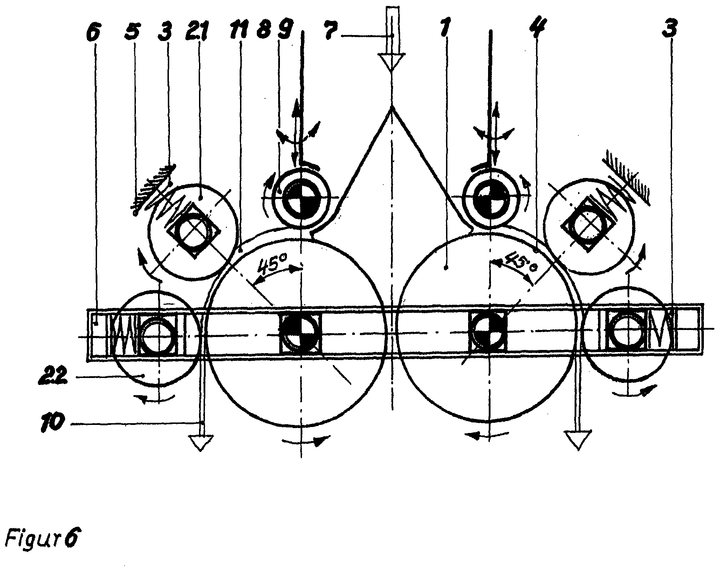

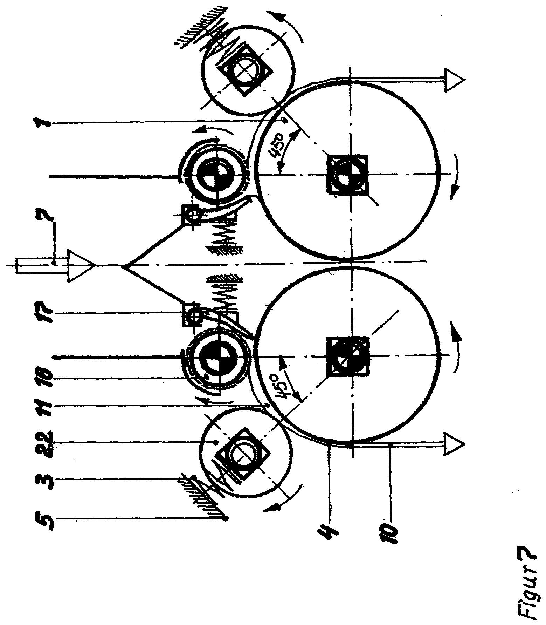

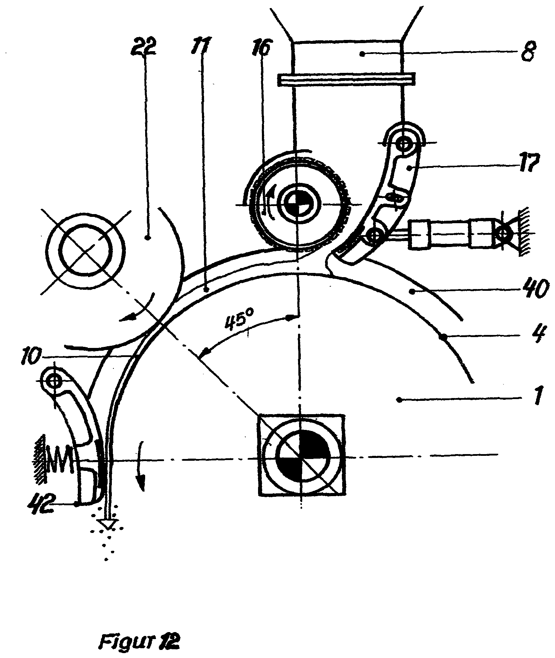

Die Figuren 2 bis 7 zeigen in schematischer Darstellung eine als zweistufige Strangschicht-Rollenmühle bezeichnete Zerkleinerungsvorrichtung in acht Varianten, wobei die Varianten gemäß den Figuren 2, 3, 4, 5, 6 und 7 nicht zur Erfindung gehören, . Die Zerkleinerungsvorrichtung besteht in ihrem Grundaufbau gemäß den Figuren 2 bis 5 aus einer mit größerem Durchmesser und seitlichen Spurkränzen 40 (siehe Figur 12) ausgeführten Antriebsrolle 1, auf deren Umfang in unterschiedlicher Anordnung zwei mit kleinerem Durchmesser ausgeführte Mahlrollen 2.1 und 2.2 positioniert sind, die hydro-pneumatisch durch eine Anstellvorrichtung 3 auf die Antriebsrolle 1 angestellt sind und über die Material belegte Beanspruchungsoberfläche 4 geschleppt werden. Die Figuren 5, 5a und 5b zeigen drei Vorrichtungsvarianten, bei denen die erste Beanspruchungsstufe jeweils durch eine Feinbrechwalze übernommen wird, wobei bei den erfindungsgemäßen Varianten gemäß den Figuren 5a und 5b nicht eine mit größerem Durchmesser und Spurkränzen ausgeführte Rolle 1.1, sondern jeweils die Mahlrolle 2.2 angetrieben wird. Die Figuren 6 und 7 zeigen zwei Duplex-Ausführungen, entstanden aus der spiegelbildlichen Anordnung der Vorrichtungsvarianten nach den Figuren 2 und 5, wobei in Figur 7 der Schlagrotors 15 gemäß Figur 5 weggelassen ist.

Bei Figur 2 ist die erste Mahlrolle 2.1 um 45 Grad und die zweite Mahlrolle 2.2 um 90 Grad vom Scheitel der Antriebsrolle 1 in Drehrichtung versetzt angeordnet. Die Mahlrollen 2.1 und 2.2 sind vorzugsweise mit gleichen Durchmessern ausgeführt. Das Durchmesserverhältnis der Antriebsrolle 1 zu den beiden Mahlrollen beträgt 2,0 bis 2,5. Während die erste Mahlrolle 2.1 mit spezifischen Zerkleinerungskräften von 500 bis 1000 kN/m² auf die Material belegte Beanspruchungsoberfläche 4 der Antriebsrolle 1 angestellt ist und damit durch eine gewisse Vorbeanspruchung bzw. Vorkompression der Materialschicht optimale Bedingungen für die zweite Zerkleinerungsstufe schafft, arbeitet die zweite Mahlrolle 2.2 mit Beanspruchungsintensitäten, die je nach Material und der zu lösenden Zerkleinerungsaufgabe bei 2000 bis 4500 kN/m² liegen. Dabei ist die erste um 45 Grad vom Scheitel der Antriebsrolle 1 versetzt angeordnete Mahlrolle 2.1 hydro-pneumatisch vorzugsweise über ein Hebelsystem 5 auf die Antriebsrolle 1 angestellt, während die zweite um 90 Grad versetzt angeordnete Mahlrolle 2.2 in Längsführungen 6 hydraulisch beaufschlagt und beweglich gelagert ist.

Die Beaufschlagung der Zerkleinerungsvorrichtung mit dem in der Regel aus Frisch-und Umlaufgut bestehenden Mahlgut 7 erfolgt über einen Füllstand gesteuerten Dosierbehälter 8 mittels einer synchron zur Antriebsrolle 1 rotierenden Aufgabeeinrichtung 9, die im Scheitelbereich der Antriebsrolle 1 positioniert ist und das Mahlgut 7 als stranggeformte und seitlich begrenzte Materialschicht 11 in der gewünschten Schichtdicke kontinuierlich auf die Beanspruchungsoberfläche 4 ablegt, um mit der Umfangsgeschwindigkeit der Antriebsrolle 1 nacheinander den beiden Mahlrollen 2.1 und 2.2 zur Beanspruchung zugeführt zu werden. Das nach seiner Beanspruchung mehr oder weniger brikettiert anfallende Mahlgut 10 wird dann entweder innerhalb der Zerkleinerungsvorrichtung durch einen am Umfang der Antriebsrolle 1 angeordneten Schlagrotor 15 oder durch ein entsprechend elastisch angestelltes Desagglomerationswerkzeug 42 oder durch eine unterhalb der Antriebsrolle positionierte Paddelschnecke 38 oder außerhalb der Zerkleinerungsvorrichtung, z.B. im Sichter 23, desagglomeriert.

Bei geschwindigkeitsproportionaler Zuführung des Mahlguts 7 verfügt die Zerkleinerungsvorrichtung bei einem konstant bleibenden spezifischen Energiebedarf über ein lineares Durchsatz-Geschwindigkeitsverhalten in einem weiten Geschwindigkeitsbereich. Sowohl die gewünschte Schichtdicke der Materialschicht 11 des zu verarbeitenden Materials als auch die optimale Zerkleinerungskraft sind frei wählbar und können unabhängig voneinander, entweder im Stillstand oder auch während des laufenden Betriebs, eingestellt bzw. verändert werden.

Figur 3 zeigt eine Ausführung der Zerkleinerungsvorrichtung, bei der die erste Mahlrolle 2.1 sich im Scheitel der Antriebsrolle 1 befindet, während die zweite Mahlrolle 2.2 in Drehrichtung der Antriebsrolle 1 um 90 Grad verlagert angeordnet ist. Der Einsatz dieser Variante kann vorteilhaft sein, wenn Material bedingt zwischen den beiden Zerkleinerungsstufen eine Materialauflockerung mittels einer Auflockerungseinrichtung 12 stattfinden soll oder etwa zur Verbesserung des Zerkleinerungsergebnisses Wasser oder ein geeignetes Mahlhilfsmittel 13 zugeführt werden müssen. Die Herstellung einer stranggeformten Materialschicht 11 mit vorgegebener Dicke erfolgt wie bei Figur 3 über eine als rotierende Dosiereinrichtung ausgebildete Aufgabeeinrichtung 9, die sich über einer sichelförmig ausgebildeten Austragswand 14 eines Füllstand gesteuerten Dosierbehälters 8 befindet und analog Figur 2 synchron mit der Geschwindigkeit der Antriebsrolle 1 betrieben wird.

Figur 4 zeigt eine Ausführungsvariante, bei der in Abweichung zu Figur 3 die zweite Mahlrolle 2.2 gegenüber der ersten Mahlrolle 2.1 um 45 Grad in Drehrichtung der Antriebsrolle 1 verlagert angeordnet ist. Diese Variante ist besonders gut geeignet, die Desagglomeration des anfallenden Mahlguts 10 einem Schlagrotor 15 oder einem Desagglomerationswerkzeug 42 am Umfang der Antriebsrolle 1 zu übertragen.

Figur 5 veranschaulicht eine Ausführungsvariante für die Verarbeitung eines Mahlguts 7, vergleichbar etwa mit einem Zementklinker, der nicht nur grobkörnig ist, sondern in der Regel auch einen großen Anteil von Überkorngrößen enthält. Bei dieser Variante übernimmt vorzugsweise im Scheitelbereich der Antriebsrolle 1 eine Drehzahl geregelte Feinbrechwalze 16 die Doppelfunktion der Erstbeanspruchung und Präparation des zu verarbeitenden Materials zu einer stranggeformten Materialschicht 11. Die weitere Zerkleinerung mit hoher Beanspruchungsintensität erfolgt dann durch eine um 45 Grad vom Scheitel der Antriebsrolle 1 in Drehrichtung verlagert angeordnete Mahlrolle 2.2. Diese Variante bietet sich auch dafür an, die Desagglomeration des nach zweistufiger Beanspruchung anfallenden Mahlguts 10 mit Hilfe eines Schlagrotors 15 oder eines Desagglomerationswerkzeugs 42 innerhalb der Zerkleinerungsvorrichtung am Umfang der Antriebsrolle 1 zu realisieren.

Figur 5a zeigt eine erfindungsgemäße Ausführungsvariante mit dem Unterschied zu der nicht erfindungsgemäßen Variante gemäß Figur 5, dass zur Verbesserung eines schwingungsarmen Betriebs der Zerkleinerungsvorrichtung nicht eine mit größerem Durchmesser und Spurkränzen ausgeführte Rolle 1.1 die Mahlrolle 2.2 angetrieben wird und beide Rollen vorzugsweise in um 10 bis 30 Grad zur Horizontalen geneigten Längsaufnahmen 6 gelagert werden, wobei die angetriebene Mahlrolle 2.2 in den Längsaufnahmen 6 fest und unverschiebbar gelagert ist, während die nicht angetriebene und mit größerem Durchmesser ausgeführte Rolle 1.1 verschiebbar gelagert ist und hydro- pneumatisch auf die angetriebene Mahlrolle 2.2 angestellt wird.

Figur 5b zeigt eine weitere erfindungsgemäße Ausführungsvariante, bei der ebenfalls die Mahlrolle 2.2 angetrieben wird und beide Rollen in zur Horizontalen geneigten Längsaufnahmen 6 gelagert werden, wobei abweichend zu Figur 5a die mit größerem Durchmesser ausgeführte und nicht angetriebene Rolle 1.1 in den beidseitigen Längsaufnahmen 6 fest und unverschiebbar gelagert ist, während die angetriebene Mahlrolle 2.2 verschiebbar gelagert und hydro-pneumatisch auf die Rolle 1.1 angestellt ist.

Figur 6 zeigt eine nicht erfindungsgemäße Vorrichtung in schematischer Darstellung als Duplex- Mühle, realisiert durch die spiegelbildliche Anordnung von zwei Vorrichtungen gemäß Figur 2. Die Vorrichtung kann in dieser Ausführung den doppelten Durchsatz liefern und, wenn erforderlich, durch Außerbetriebsetzung von einer Maschinenhälfte, nur mit einer Teillast von 50 % wirtschaftlich betrieben werden. Dieser Vorteil kann auch genutzt werden, wenn eine Mühlenhälfte nicht betriebsfähig ist oder z. B. einer Reparatur unterzogen werden muss.

Figur 7 zeigt eine nicht erfindungsgemäße Vorrichtung in schematischer Darstellung als Duplex- Mühle, realisiert durch die spiegelbildliche Anordnung von zwei Vorrichtungen gemäß Figur 5, wobei auch die erfindungsgemäße Vorrichtungsvarianten gemäß Figur 5a oder 5b zur Anwendung gelangen kann.

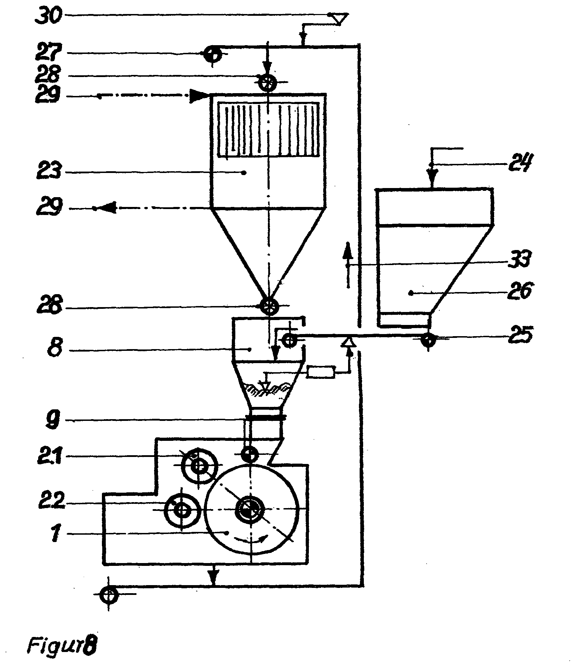

Figur 8 zeigt eine nicht erfindungsgemäße zweistufige Strangschicht-Rollenmühle als Hauptmaschine im Flowsheet einer Mahlanlage. Das dargestellte Flowsheet könnte für die Zementmahlung oder auch zur Verarbeitung eines vergleichbaren Materials zur Anwendung gelangen. Die Operationen der dosierten Materialaufgabe über den Dosierbehälter 8 und der Aufgabeeinrichtung 9 und die Herstellung einer stranggeformten Materialschicht mit vorgegebener Schichtdicke sind in die zweistufige Zerkleinerungsvorrichtung voll integriert. Die Desagglomeration des beanspruchten Mahlguts, in der Zeichnung nicht näher dargestellt, kann innerhalb, aber auch außerhalb der Mühle, z.B. im Sichter 23, erfolgen. Das Frischgut 24, in der Zeichnung nur für die Komponente Zementklinker dargestellt, wird über eine Dosierbandwaage 25 aus einem Vorratsbunker 26 abgezogen und dem in die Zerkleinerungsvorrichtung integrierten Dosierbehälter 8 aufgegeben, dessen Füllstand geregelt wird. Zur besseren Vermischung des Umlaufguts 33 mit dem Frischgut 24 kann die Frischgutaufgabe auch nach der Mühle, z.B. am Becherwerksfuß, erfolgen. Das Umlaufbecherwerk 27 beaufschlagt einen als Hochleistungssichter ausgebildeten Sichter 23, der lufttechnisch über Zellenradschleusen 28 abgedichtet ist und das Griesgut dem Dosierbehälter 8 der Mühle wieder zuführt. Der Sichter 23 scheidet das mit der Sichtluft 29 transportierte Fertiggut direkt in einem Gewebeabscheider ab, auf dessen Darstellung in der Zeichnung verzichtet wurde. Die Mahlanlage wird auf die Einhaltung eines konstanten Umlaufmassestroms geregelt, der über eine im Becherwerk 27 integrierte Durchlaufmengenmesseinrichtung 30 kontinuierlich gemessen wird.

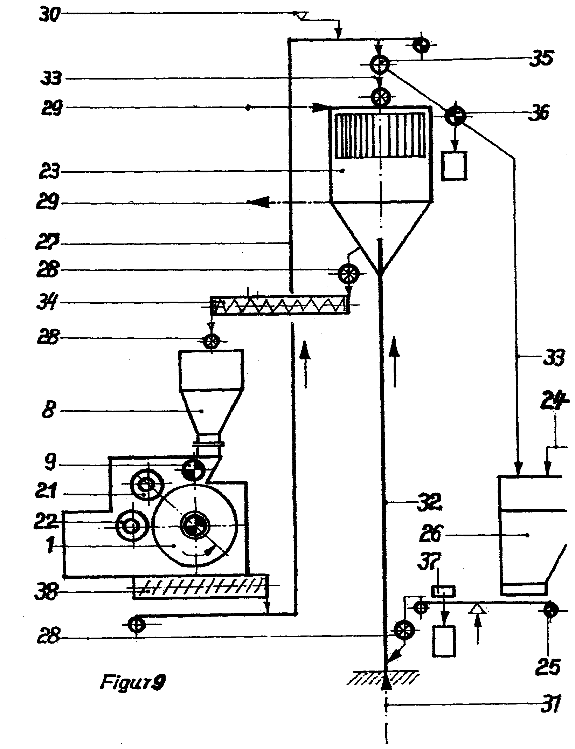

Figur 9 zeigt eine nicht erfindungsgemäße Zerkleinerungsvorrichtung in Kreislaufschaltung mit einem kombiniert pneumatisch und mechanisch beaufschlagten Hochleistungssichter 23 zur Verarbeitung von feuchtem Hüttensand. Der feuchte Hüttensand wird über eine Dosierbandwaage 25 einem Steigrohrtrockner 32 aufgegeben, der das Material beladene Trocknungsgas 31 axial von unten einem Hochleistungssichter 23 zuführt, während dieser gleichzeitig durch das Umlaufgut 33 über ein Becherwerk 27 mechanisch von oben beschickt wird. Das Frischgut 24 wird während seines Transports im Steigrohrtrockner 32 getrocknet und erfährt im Sichter 23 und in den Gas führenden Rohrleitungen zum Gewebeabscheider seine Resttrocknung. Den Griestransport zum Dosierbehälter 8 der zweistufigen Strangschicht-Rollenmühle übernimmt dann vorteilhaft ein Schneckenförderer 34, der auf Druckmessdosen gesetzt, auch zugleich die Messung des Umlaufmassestroms übernehmen kann. Um angereicherte Eiseneinschlüsse aus dem Materialkreislauf entfernen zu können, befindet sich im Materialweg vom Becherwerk 27 zum Sichter 23 eine Zweiwegeschurre 35, so dass turnusmäßig das Umlaufgut 33 über einen Trommelmagnetabscheider 36 in den Vorratsbunker 26 vor der Dosierbandwaage 25 umgeleitet werden kann. Die Eisenfremdteile im Frischgut 24 werden über einen oberhalb der Dosierbandwaage 25 positionierten Magnetabscheider 37 ausgetragen. Die Beaufschlagung der Zerkleinerungsvorrichtung erfolgt über den Füllstand gesteuerten Dosierbehälter 8 mit der rotierenden Austragseinrichtung 9. Zur Desagglomeration des zweifach beanspruchten Mahlguts 10 ist gemäß Flowsheet eine Paddelschnecke 38 vorgesehen, die sich unmittelbar unter der Mühle befindet.

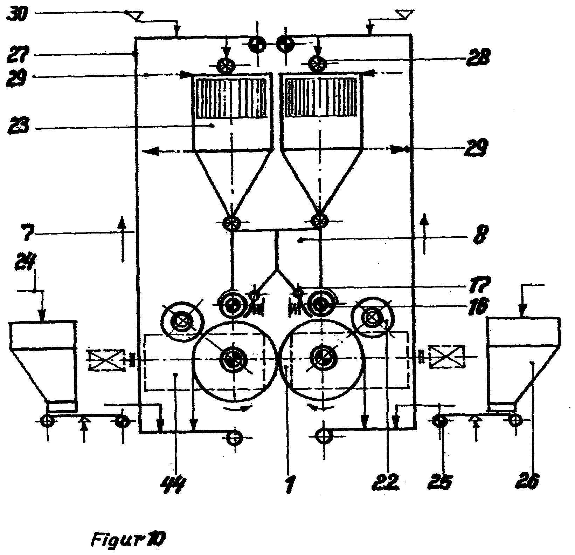

Figur 10 zeigt eine nicht erfindungsmäße Duplex- Mühle, realisiert unter Anwendung der Vorrichtungsvariante gemäß Figur 7, im System einer Mahlanlage, wie sie beispielhaft strukturiert sein könnte, wenn in der Mühle zwei gleiche oder verschiedene Materialien oder Materialgemische auf unterschiedliche Fertiggutqualität verarbeitet werden sollen. Die dargestellte Mahlanlage ist auch geeignet, ein einziges Material oder ein Materialgemisch hintereinander auf beiden Maschinenhälften auf superfeine Fertiggutqualität zu mahlen. Zur Lösung dieser Zerkleinerungsaufgaben wird jeder Mühlenstrang separat mit Frischgut 24 beaufschlagt und ist autark mit einem im Kreislauf geschalteten Hochleistungssichter 23 ausgerüstet. Die Antriebsrolle 1 jedes Mühlenstrangs wird vorzugsweise unter Einsatz eines Platz sparenden und an sich bekannten Kegelstirnradgetriebes 44 angetrieben.

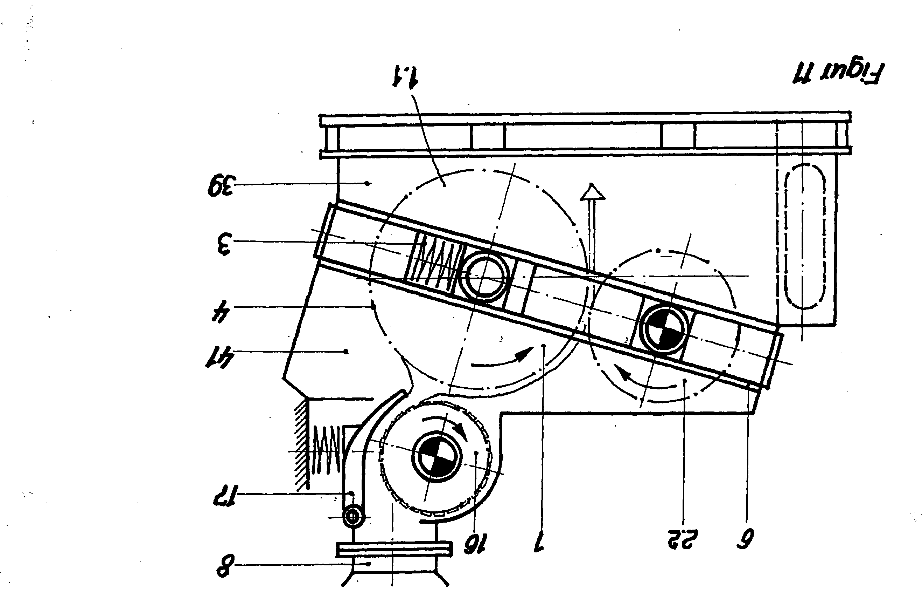

Figur 11 zeigt in vereinfachter Darstellung die erfindungsgemäße Zerkleinerungsvorrichtung gemäß Figur 5a mit integriertem Dosierbehälter 8 und der zugleich als Feinbrechwalze16 ausgebildeten rotierenden Aufgabeeinrichtung zur dosierten Materialbeaufschlagung, positioniert im Scheitelbereich der als Antriebsrolle 1 bezeichneten und mit größerem Durchmesser sowie Spurkränzen ausgeführten Rolle. Die in Seitenansicht dargestellte Vorrichtung besteht im Wesentlichen aus einem schwingungssteifen Maschinengestell 39, das in den um 10 bis 30 Grad zur Horizontalen geneigten Längsführungen 6 die Lagerkörper der mit größerem Durchmesser ausgeführten Rolle 1 und der Mahlrolle 2.2 aufnimmt. Um einen schwingungsarmen bzw. schwingungsfreien Betrieb zu gewährleisten, wird nicht die mit größerem Durchmesser ausgeführte Rolle 1.1, sondern die Mahlrolle 2.2 angetrieben. Zu diesem Zweck ist vorzugsweise Mahlrolle 2.2 fest und unverschiebbar in den Längsaufnahmen gelagert, während Rolle 1 in den Längsaufnahmen 6 verschiebbar gelagert ist und hydro- pneumatisch auf die angetriebene Mahlrolle 2.2 angestellt wird. Platz sparend angetrieben wird die Mühle vorteilhaft über ein an sich bekanntes Kegelstirnradgetriebe, wobei große Maschineneinheiten auch über einen Doppelantrieb verfügen können. Vorzugsweise über dem Scheitel der mit größerem Durchmesser ausgeführten Rolle 1 befindet sich die Feinbrechwalze 16, die in Wirkverbindung mit einer hydraulisch verstellbaren Beanspruchungswand neben ihrer Funktion als erste Beanspruchungsstufe zugleich die dosierte Zuführung und Herstellung der stranggeformten Materialschicht 11 besorgt. Die Feinbrechwalze wird geschwindigkeitssynchron zur Mahlrolle 2.2 angetrieben. Die oberhalb der Längsaufnahmen 6 befindlichen Maschinenabdeckungen 41 sind zum Zwecke von notwendigen Reparaturen und Inspektionen so ausgeführt, dass sie mit geringem Aufwand aufgeklappt oder horizontal ausgefahren werden können. Zur Gewährleistung eines stabilen Betriebsablaufs werden auf der Beanspruchungsoberfläche 4 von Rolle 1 im Bereich der Feinbrechwalze 16 sowohl der Massestrom als auch die Materialschichtdicke kontinuierlich kontrolliert. Das Maschinengestell 39 ist nach unten zu offen. Je nach den speziellen Projektanforderungen kann innerhalb des Maschinengestells ein Reinigungsförderer untergebracht oder auch ein Desagglomerationswerkzeug 42 zur Desagglomeration des Umlaufgutes angeschlossen werden. Die konstruktiven Gestaltungsmerkmale finden vorzugsweise bei den Vorrichtungsvarianten gemäß Figur 5, 5a und 5b wie auch bei entsprechenden Duplex- Ausführungen Anwendung.

Figur 12 (nicht zur Erfindung gehörig) zeigt in vergrößerter Darstellung die kombinierte Einrichtung zur dosierten Materialaufgabe und Erstbeanspruchung des aus Umlaufgut und Frischgut bestehenden Mahlguts durch Verwendung einer Feinbrechwalze 16 mit elastisch, bzw. hydraulisch verstellbarer Beanspruchungswand 17, vorzugsweise angeordnet im Scheitelbereich der mit Spurkränzen 40 ausgeführten Antriebsrolle 1. Die Feinbrechwalze 16, die über eine strukturierte Beanspruchungsoberfläche verfügt, ist Drehzahl geregelt und liefert einen geschwindigkeitsproportionalen Massestrom, der als stranggeformte Materialschicht 11 einer vom Scheitel der Antriebsrolle1 in Drehrichtung versetzt angeordneten Mahlrolle 2.2 zugeführt wird und dabei eine Zweitbeanspruchung unter Anwendung von spezifischen Zerkleinerungskräften von 2000 bis 4500 kN/m² erfährt. Da die Feinbrechwalze 16, insbesondere auch durch ihre vorwiegend scherende und reibende Zerkleinerung, einen beachtlichen Beitrag zum Gesamtzerkleinerungsergebnis leisten kann, beschränkt sich diese Vorrichtungsvariante nur auf die Verwendung von Mahlrolle 2.2. Die Desagglomeration des zweifach beanspruchten Mahlguts 10 kann vorteilhaft durch einen in der horizontalen Mittellinie der Antriebsrolle 1 angeordneten Schlagrotor erfolgen, aber auch in der Weise, dass das beanspruchte und gewöhnlich brikettiert anfallende Mahlgut 10 durch den keilförmigen Spalt, gebildet aus der mit größerem Durchmesser ausgeführten Rolle 1 und einem elastisch angestellten Desagglomerationswerkzeug 42, geführt wird. Die Beschreibung trifft sinngemäß auch für die Vorrichtungsvarianten gemäß Figur 5a und 5b zu.

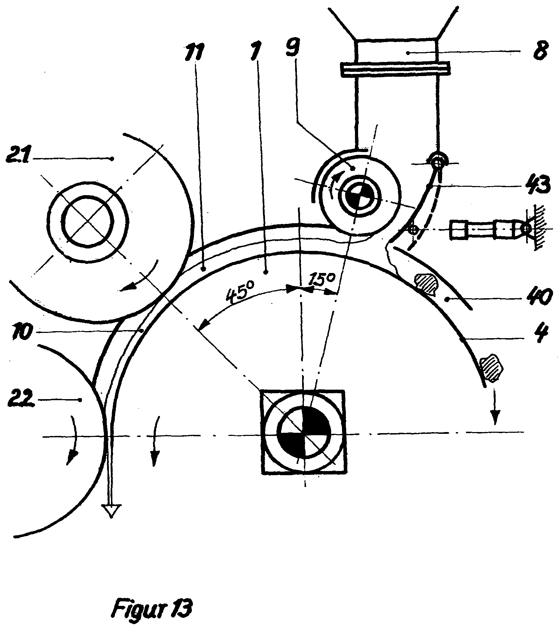

Figur 13 (nicht zur Erfindung gehörig) zeigt am Beispiel von Vorrichtungsvariante gemäß Figur 2 die Möglichkeit auf, wie bei der neuen Zerkleinerungsvorrichtung metallische Fremdkörper, insbesondere Eisenfremdteile, schon bei der Präparation der Strangschicht 11 bzw. ihrer dosierten Aufgabe auf die Beanspruchungsoberfläche 4 der Antriebsrolle 1 sowohl zur Gewährleistung eines störungsfreien Betriebsablaufs als auch zum Schutz der Beanspruchungsoberflächen aus dem Mahlkreislauf durch Ausschleusung entfernt werden können. Zu diesem Zweck ist der Füllstand gesteuerte Dosierbehälter 8 mit der an seinem Auslauf angeordneten rotierenden Dosierund Aufgabeeinrichtung 9 bzw. Feinbrechwalze 16 vorzugsweise um 10 bis 20 Grad aus dem Scheitel der Antriebsrolle 1 versetzt entgegen der Drehrichtung angeordnet, wobei durch eine im Bereich der Dosier- und Austragseinrichtung gelenkig und elastisch einstellbare sowie lastabhängig gesteuerte Rückwand 43 die Ausschleusung von metallischen Fremdkörpern entweder kontinuierlich oder nach einem vorgegebenen Zeitprogramm, z. B. stündlich, erfolgen kann. Das Prinzip der Ausschleusung von Fremdkörpern ist für alle Vorrichtungsvarianten anwendbar.

### Aufstellung der verwendeten Bezugszeichen

- 1: Rolle mit größerem Durchmesser und seitlichen Spurkränzen
- 2.2: Zweite Mahlrolle
- 3: Hydro-pneumatische Anstellvorrichtung
- 4: Beanspruchungsoberfläche
- 6: Längsführung
- 7: Mahlgut (Umlaufgut und Frischgut)
- 8: Dosierbehälter
- 9: Aufgabeeinrichtung
- 10: Beanspruchtes Mahlgut
- 11: Stranggeformte Materialschicht

- 16: Feinbrechwalze
- 17: Beanspruchungswand
- 18: Bezogene Zerkleinerungskraft
- 19: Arbeitspunkt
- 20: Aufgabedurchsatz
- 21: Zerkleinerungsergebnis, ausgedrückt als D90 Durchgang
- 22: Mahlbarkeit nach Bond
- 39: Maschinengestell
- 41: Maschinenabdeckung
- 42: Desagglomerationswerkzeug
- 43: Gelenkig und elastisch einstellbare Rückwand

## Patentansprüche

1. Verfahren zur Feinmahlung von mineralischen Materialien wie z.B. Kalkstein, Zementklinker, Hüttensand oder anderen Recyclingmaterialien auf Fertigqualität im Kreislauf mit einem Sichter, wobei das Mahlgut eine zweifache Beanspruchung erfährt und die Hauptbeanspruchung im Rollenspalt zwischen zwei sich gegenläufig drehenden und horizontal gelagerten Rollen erfolgt, **dadurch gekennzeichnet, dass**
eine erste Rolle (2.2) als angetriebene Mahlrolle ausgeführt ist, während eine zweite, einen größeren Durchmesser aufweisende Rolle (1.1) durch die erste Rolle (2.2) geschleppt wird, wobei die erste Rolle (2.2), in Längsaufnahmen (6) fest und unverschiebbar gelagert ist, während die zweite Rolle (1.1) mit einer Beanspruchungsoberfläche (4) auf die erste Rolle (2.2) hydro-pneumatisch angestellt ist, oder die zweite, einen größeren Durchmessers aufweisende Rolle (1.1) fest und unverschiebbar in Längsaufnahmen (6) gelagert ist, während die erste Rolle (2.2) hydro-pneumatisch auf die Beanspruchungsoberfläche (4) der zweiten Rolle (1.1) angestellt ist und das zu zerkleinernde Material (7) vor seiner Zerkleinerung im Rollenspalt zwischen den beiden Rollen (1.1, 2.2), die in den um 10 bis 30 Grad zur Horizontalen geneigten Längsaufnahmen (6) gelagert sind, in einer Aufgabeeinrichtung (9) mittels einer Drehzahl geregelten Feinbrechwalze (16) mit elastisch verstellbarer Beanspruchungswand (17) einer scherenden und reibenden Beanspruchung unterzogen wird, um anschließend regelbar als stranggeformte Schicht (11) mit vorgegebener Dicke auf die Beanspruchungsoberfläche (4) im Scheitelbereich der zweiten Rolle (1.1) aufgegeben und in den Rollenspalt der Rollen (1.1, 2.2) zur Zerkleinerung transportiert zu werden.

2. Verfahren nach Anspruch 1, **dadurch gekennzeichnet, dass** die Beanspruchung der stranggeformten Materialschicht (11) im Rollenspalt der beiden Rollen (1.1, 2.2) in Abhängigkeit vom Material und der zu erzielenden Mahlfeinheit unter Anwendung von spezifischen Zerkleinerungskräften (18) von 2.000 bis 4.500 kN/m² erfolgt.

3. Verfahren nach Anspruch 1 oder 2, **dadurch gekennzeichnet, dass** in Abhängigkeit vom zu zerkleinernden Material und der zu lösenden Zerkleinerungsaufgabe die Größe der Zerkleinerungskraft (18) und die Schichtdicke (11) unabhängig voneinander eingestellt werden.

4. Verfahren nach einem der vorstehenden Ansprüche, **dadurch gekennzeichnet, dass** das Mahlgut (10) nach seiner Beanspruchung im Rollenspalt der beiden Rollen (1.1, 2.2) innerhalb der Zerkleinerungsvorrichtung durch ein Desagglomerationswerkzeug (42) oder in einem nach geschalteten Sichter (23) außerhalb einer Vorrichtung zur Durchführung des Verfahrens desagglomeriert wird.

5. Verfahren nach einem der vorstehenden Ansprüche, **dadurch gekennzeichnet, dass** der Durchsatz durch Drehzahlveränderung der angetriebenen Mahlrolle (2.2) beliebig eingestellt und in einem weiten Bereich bis zu Umfangsgeschwindigkeiten von 5 m/s gesteigert werden kann und bei zur Geschwindigkeit proportionaler Materialbeaufschlagung der spezifische Energieaufwand konstant bleibt.

6. Verfahren nach einem der vorstehenden Ansprüche, **dadurch gekennzeichnet, dass** bei einer spiegelbildlichen Doppelanordnung des Zerkleinerungsprinzips eine Feinmahlung von zwei gleichen oder verschiedenen Materialien oder Materialgemischen auf gleiche oder unterschiedliche Fertigqualität durchführbar ist.

## Claims

1. Method for fine grinding of mineral materials, such as, for example, limestone, cement clinker, granulated slag or other recycling materials, to finished quality in a circuit with a sifter, wherein the grinding stock is subjected to a dual loading and the main loading is carried out in the roller gap between two rollers which rotate in opposite directions and which are supported horizontally, **characterised in that**
a first roller (2.2) is constructed as a driven grinding roller, whilst a second roller (1.1) having a larger diameter is towed by the first roller (2.2), wherein the first roller (2.2) is securely and non-displaceably supported in longitudinal receiving members (6), whilst the second roller (1.1) with a loading surface (4) is hydro-pneumatically applied to the first roller (2.2), or the second roller (1.1) which has a larger diameter is securely and non-displaceably supported in longitudinal receiving members (6), whilst the first roller (2.2) is hydro-pneumatically applied to the loading surface (4) of the second roller (1.1) and the material (7) which is intended to be crushed, prior to being crushed in the roller gap between the two rollers (1.1, 2.2) which are supported in the longitudinal receiving members (6) which are inclined through from 10 to 30 degrees with respect to the horizontal, is subjected to a shearing and frictional loading in a feeding device (9) by means of a speed-regulated fine crushing roller (16) having a resiliently adjustable loading wall (17) in order to be subsequently fed in a controllable manner as an extruded layer (11) with a predetermined thickness onto the loading surface (4) in the apex region of the second roller (1.1) and to be transported into the roller gap of the rollers (1.1, 2.2) for crushing.

2. Method according to claim 1, **characterised in that** the loading of the extruded material layer (11) in the roller gap of the two rollers (1.1, 2.2) is carried out in accordance with the material and the grinding fineness which is intended to be achieved using specific crushing forces (18) of from 2000 to 4500 kN/m².

3. Method according to claim 1 or 2, **characterised in that**, in accordance with the material which is intended to be crushed and the crushing objective which is intended to be achieved, the size of the crushing force (18) and the layer thickness (11) are adjusted independently of each other.

4. Method according to any one of the preceding claims, **characterised in that** the grinding stock (10) after it has been subjected to loading in the roller gap of the two rollers (1.1, 2.2) within the crushing device is deagglomerated by means of a deagglomeration tool (42) or in a downstream sifter (23) outside a device for carrying out the method.

5. Method according to any one of the preceding claims, **characterised in that** the throughput can be adjusted as desired by changing the speed of the driven grinding roller (2.2) and can be increased in a wide range up to circumferential speeds of 5 m/s and, when a loading which is proportional to the speed is applied to the material, the specific energy expenditure remains constant.

6. Method according to any one of the preceding claims, **characterised in that**, with a mirror-symmetrical dual arrangement of the crushing principle, a fine grinding of two identical or different materials or material mixtures to the same or different finished quality can be carried out.

## Revendications

1. Procédé de broyage fin de matériaux minéraux, tels que de la roche calcaire, du clinker de ciment, du sable de fonderie ou d'autres matériaux recyclés, en qualité finie, en circuit avec un séparateur, le produit broyé subissant une double contrainte, la contrainte principale ayant lieu dans l'intervalle entre deux tambours tournant en sens inverse et logés horizontalement, **caractérisé en ce que**
un premier tambour (2.2) est conçu comme tambour broyeur entraîné, alors qu'un second tambour (1.1), qui présente un diamètre supérieur, est remorqué par le premier tambour (2.2), le premier tambour (2.2) étant logé de manière fixe et non déplaçable dans des logements longitudinaux (6), alors que le second tambour (1.1) est appliqué de manière hydropneumatique au moyen d'une surface de contrainte (4) au premier tambour (2.2) ou le second tambour (1.1), qui présente un diamètre plus grand, est logé de manière fixe et non déplaçable dans des logements longitudinaux (6), alors que le premier tambour (2.2) est appliqué de manière hydropneumatique à la surface de contrainte (4) du second tambour (1.1), et **en ce que**, préalablement à son broyage dans l'intervalle entre les deux tambours (1.1, 2.2) qui sont logés dans les logements longitudinaux (6) inclinés de 10 à 30 degrés par rapport à l'horizontale, le matériau à broyer (7) est soumis à une contrainte de cisaillement et de friction dans un dispositif d'alimentation (9) au moyen d'un tambour de broyage fin (16) à vitesse de rotation réglée comportant une paroi de contrainte (17) réglable élastiquement, pour être ensuite amené de manière réglable sous forme de couche extrudée en continu (11) d'une épaisseur prédéfinie à la surface de contrainte (4) dans la zone du sommet du second tambour (1.1) et transporté dans l'intervalle des tambours (1.1, 2.2) pour y être broyé.

2. Procédé suivant la revendication 1, **caractérisé en ce que** la contrainte appliquée dans l'intervalle entre les deux tambours (1.1, 2.2) à la couche de matériau extrudée en continu (11) a lieu en fonction du matériau et de la finesse de broyage recherchée en appliquant des forces de broyage spécifiques (18) de 2.000 à 4.500 kN/m².

3. Procédé suivant la revendication 1 ou 2, **caractérisé en ce que** la quantité de force (18) et l'épaisseur de couche (11) sont réglées indépendamment l'une de l'autre en fonction du matériau à broyer et de l'opération de broyage à effectuer.

4. Procédé suivant une des revendications précédentes, **caractérisé en ce qu'**après avoir été exposé à la contrainte dans l'intervalle entre les deux tambours (1.1, 2.2) à l'intérieur du dispositif de broyage, le produit broyé (10) est désaggloméré par un outil de désagglomération (42) ou dans un séparateur (23) monté en aval à l'extérieur d'un dispositif destiné à l'exécution du procédé.

5. Procédé suivant une des revendications précédentes, **caractérisé en ce que** le débit peut être réglé librement par modification de la vitesse de rotation du tambour de broyage entraîné (2.2) et augmenté dans une grande plage de réglage jusqu'à des vitesses périphériques de 5 m/s et qu'à alimentation en matériau proportionnelle à la vitesse la dépense énergétique spécifique reste constante.

6. Procédé suivant une des revendications précédentes, **caractérisé en ce qu'**à disposition double symétrique du principe de broyage, un broyage fin de deux matériaux ou mélanges de matériaux identiques ou différents peut être réalisé pour obtenir une qualité finie identique ou différente.
